# EUROPEAN PATENT SPECIFICATION

(11) **EP 0 326 281 B1**
(45) Date of publication and mention of the grant of the patent: **13.04.1994**
(21) Application number: 89300453.1
(22) Date of filing: 18.01.1989
(51) Int. Cl.: H02M 7/06, H02M 7/08

(54) **Rectifier device for AC generator of an automobile**
Wechselrichtereinrichtung für Automobilwechselstromgenerator
Dispositif redresseur pour générateur de courant alternatif pour automobile

(30) Priority: 25.01.1988 JP 8421/88
(43) Date of publication of application: 02.08.1989
(73) Proprietor: MITSUBISHI DENKI KABUSHIKI KAISHA, Tokyo (JP)
(72) Inventor: Goda, Tsuneji c/o Himeji Seisakusho of, Himeji City Hyogo Prefecture (JP)
(74) Representative: Hackett, Sean James

(56) References cited:
- EP-A- 0 075 320
- EP-A- 0 189 340
- FR-A- 2 081 863
- ELECTRONIQUE INDUSTRIELLE, no. 138, November 1970, pages 695-700, Paris, FR; L. BERMOND et al.: "La commutation dans les diodes de puissance et ses effets - utilisation des diodes rapides"

## Description

### BACKGROUND OF THE INVENTION

### 1. Field of the Invention

This invention relates to a recitifier device for rectifying the output of an AC generator which is utilized to charge the battery and to supply power to electrical equipment on an automotive vehicle.

### 2. Description of the Prior Art

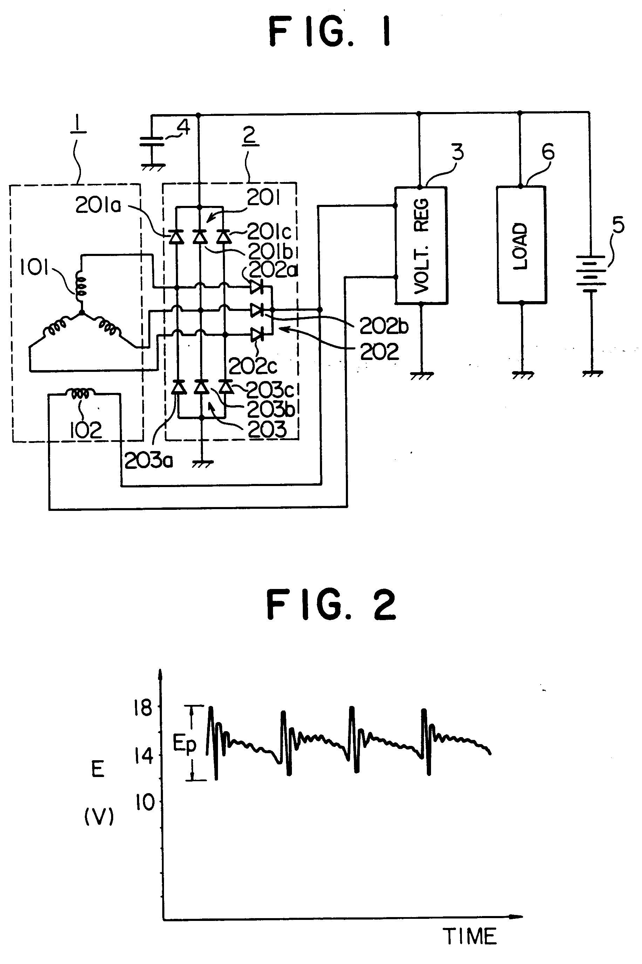

Automotive vehicles usually comprise an AC generator for supplying power to electric equipment thereof, whereby the AC output of the generator is rectified by a rectifier device and the resulting DC voltage is supplied to the equipment and the storage battery. Fig. 1 shows a typical conventional rectifier device for a three phase charging generator of an automobile. An AC generator 1 driven by the engine of the automobile, etc., comprises stationary armature coils 101 in Y-connection and a rotating field coil 102. A rectifier device 2 for effecting a full-wave rectification of the AC output of the generator 1 comprises a positive terminal side diode group 201 consisting of diodes 201a through 201c, auxiliary diode group 202 consisting of diodes 202a through 202c, and a negative terminal side diode group 203 consisting of diodes 203a through 203c. A voltage regulator 3 regulates the DC output voltage of the rectifier device 2 to a predetermined level, while a capacitor 4 suppresses the noise contained in the output of the rectifer device. A battery 5 and an electrical load 6 consisting of electrical equipment on the automobile are coupled to the output terminals of rectifier 2.

The operation of the rectifier device of Fig. 1 is as follows. When the field coil 102 is rotated by an internal combustion engine of the automobile, etc., three phase voltages are induced in the armature coils 101. Thus, the diodes in the rectifier device 2 successively goes from the forward conducting to the reverse blocking state and from the reverse blocking to the forward conducting state in turn, to output a DC voltage from the positive and negative terminals thereof. In the short period of time (called the reverse recovery time) in which a diode goes from the conducting to the reverse blocking state, a relatively large current (called the reverse recovery current) substantially greater than the negligibly small stable reverse current flows in the reverse direction. This reverse recovery current gives rise to a commutation surge, or a transient oscillating voltage having the form of a damped oscillation, in the RLC (resistance-inductance-capacitance) series circuit consisting of armature coils 101 and capacitor 4, at each transition of the diodes 201a through 201c and 203a through 203c from the conducting to the reverse blocking state. The amplitude of oscillations in the output voltage of the rectifier device 2 is greater when the reverse recovery time of the rectifier diodes is longer. Fig. 2 shows the waveform of the output voltage E of the rectifier device 2 in the case where the reverse recovery time of the diodes 201a through 201c and 203a through 203c thereof is about 15 microseconds, which is a typical value in the case of conventional rectifier device of the type shown in Fig. 1. As shown in the figure, the output voltage E of the rectifier device 2 comprises high frequency damped oscillation components, and the commutation surge voltage, or the peak-to-peak amplitude Ep of oscillations of the waveform, is as great as 6 volts.

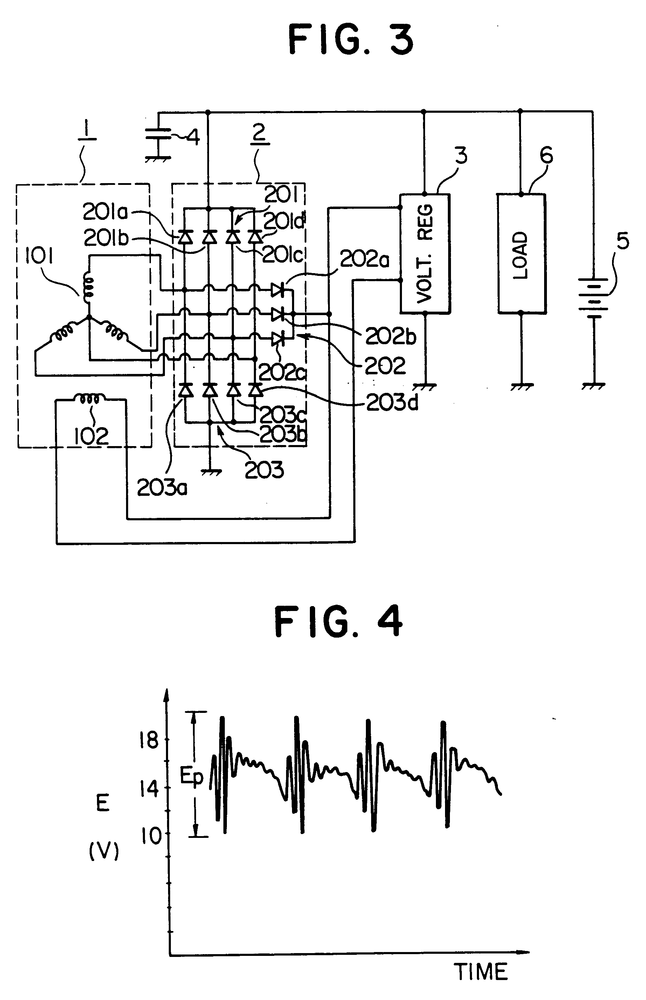

Fig. 3 shows another typical conventional rectifier device for the AC generator of an automobile. The rectifer device of Fig. 3 comprises, in addition to the diodes shown in Fig. 1, a pair of diodes 201d and 203d connected in series, wherein the neutral point of the armature coils 101 in Y-connection is connected to the intermediate point between these diodes 201d and 203d. In the case of the circuit of Fig. 3, damped oscillations in the output DC voltage of the rectifier device 2 occur, not only when the diodes 201a through 201c and 203a through 203c go from the conducting to the reverse blocking state, but also when the neutral point diodes 201d and 203d go from the conducting to the reverse blocking state. Thus, the output voltage E of the rectifier device 2 takes the waveform as shown in Fig. 4 when the reverse recovery time of the diodes 201a through 201d and 203a through 203d is equal to the above specified value. The peak-to-peak amplitude Ep of oscillations reaches 20 volts in this case.

European Patent Specification 75 320 A1 relates to a rectifying apparatus for an automotive AC generator. The specification is directed to the problem of removing noise components from the DC output of the rectifying apparatus. The solution reduces noise by the way capacitors are included in the circuit.

As described above, conventional rectifier devices for AC generators have the disadvantage that the output thereof includes high frequency oscillating components, i.e. the damped oscillations due to the commutation surges, which act as noise for the electrical equipment 6. This noise may cause malfunctioning of the equipment or lower the level of performance thereof.

### SUMMARY OF THE INVENTION

The main object of the present invention is to provide a rectifier device for an AC generator of an automobile which is capable of supplying a DC voltage with little noise, so that the electrical equipment coupled thereto may exhibit best performance thereof without any danger of malfunctioning.

A further object of the present invention is to provide such a rectifier which is simple in structure and can be produced at a low cost.

According to this invention there is provided a rectifier device as defined in claim 1 or claim 2.

### BRIEF DESCRIPTION OF THE DRAWINGS

The novel features which are believed to be characteristic of this invention is set fourth with particularity in the appended claims. The organization and operation of this invention, however, may be best understood by reference to the following detailed description of the preferred embodiments, taken in conjunction with the accompanying drawings, in which:
Fig. 1 is a circuit diagram showing a conventional rectifier device for a three phase AC generator of an automobile;
Fig. 2 shows a waveform of the output voltage of the rectifier device of Fig. 1;
Fig. 3 is a view similar to that of Fig. 1, but showing another conventional rectifier device for a three phase AC generator of an automobile;
Fig. 4 shows a waveform of the output voltage of the rectifier device of Fig. 3;
Fig. 5 is a view similar to that of Fig. 1, but showing a arrangement to which this invention relates;
Fig. 6 shows a waveform of the output voltage of the rectifier device of Fig. 5;
Fig. 7 shows the relationship between the reverse recovery time of the rectifier diodes and the amplitude of oscillations in the output voltage waveform of the rectifier device;
Fig. 8 is a view similar to that of Fig. 1, but showing another arrangement to which this invention relates;
Fig. 9 shows a waveform of the output voltage of the rectifier device of Fig. 8;
Fig. 10 is a view similar to that of Fig. 1, but showing a first embodiment according to this invention;
Fig. 11 shows a waveform of the output voltage of the rectifier device of Fig. 10;
Fig. 12 is a view similar to that of Fig. 1, but showing a second embodiment according to this invention; and
Fig. 13 shows a waveform of the output voltage of the rectifier device of Fig. 12.

In the drawings, like reference numerals represent like or corresponding parts or portions.

### DETAILED DESCRIPTION OF THE PREFERRED EMBODIMENTS

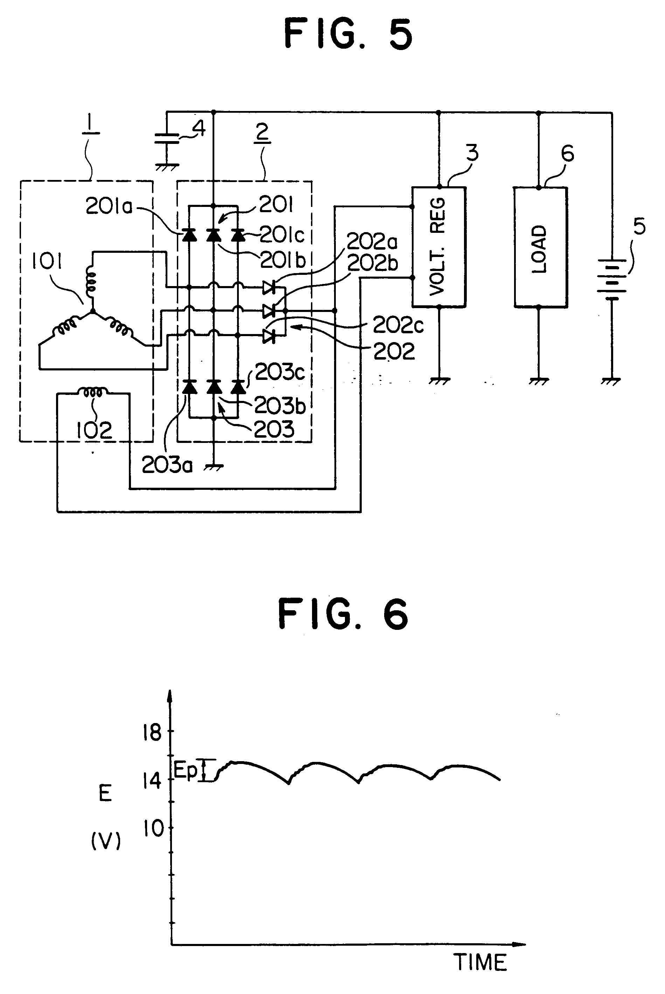

Referring now to Fig. 5 of the drawings, an arrangement to which the first embodiment of this invention relates is described. The circuit shown in Fig. 5 is identical with that shown in Fig. 1, except that the rectifier diodes at the main positive and the negative terminal in the rectifier device of Fig. 5 are of the high speed switching type. Thus, a three-phase AC generator 2 of an automobile includes a stator having armature coils 101 connected in Y-connection, and a rotor having a field coil 102. When the field coil 101 is rotated by the engine of the automobile, three phase voltages are induced in the armature coils 101. The output line voltages of the armature coils 101 in Y-connection are rectified by the full-wave rectifier device 2 comprising positive terminal side diode group 201, negative terminal side diode group 203, and auxiliary diode group 202 at the auxiliary positive terminal coupled to voltage regulator 3. Semiconductor diodes 201a through 201c of the positive terminal group 201 are connected in series with one of semiconductor diodes 203a through 203c of the negative terminal group 203, respectively, and the series circuits of diodes 201a and 203a, 201b and 203b, and 201c and 203c are coupled across the main positive and the negative terminal of the rectifier device 2, the forward direction of these diodes agreeing with the direction from the negative to the positive terminal. Further, the three line output terminals of the armature coils 101 in Y-connection are coupled to the intermediate points between diodes 201a and 203a, 201b and 203b, and 201c and 203c, respectively. On the other hand, semiconductor diodes 202a through 202c of the auxiliary group 202 are coupled across these intermediate points and the auxiliary positive terminal of the rectifier device 2, the forward direction thereof being directed toward the positive auxiliary terminal. Thus, the rectifier device 2 rectifies the three line output voltages of the armature coils 101 in Y-connection, and outputs a DC voltage across the main positive and the negative and across the auxiliary positive and the negative terminal thereof. A capacitor 4 is coupled across the main positive and the negative terminal of the rectifier 2 to smooth the DC output thereof. The capacitance of the capacitor 4 may be 0.5 microfarads. Further, electrical load 6 consisting of electrical equipment of the automobile, and battery 5 are coupled across the main positive and the negative terminal of the rectifier device 2. The voltage regulator 3 having inputs coupled across the main positive and the negative output terminal of the rectifier divice 2 controls the field current supplied to the field coil 102 to regulate the output DC voltage of the rectifier device to a predetermined level, i.e., 14.4 volts (rms).

Diodes 201a through 201c and 203a through 203c are of the high speed switching type, and the reverse recovery time thereof is about 0.5 microseconds. Thus, the reverse recovery current, which flows in the reverse direction immediately after a forward biased diode is suddenly biased in the backeward direction, is negligibly small in these diodes 201a through 201c and 203a through 203c. As a result, the waveform of the DC output voltage across the main positive and the negative terminal of the rectifier device 2 contains little damped oscillation components. Fig. 6 shows the waveform of the output voltage E across the main positive and the negative terminal of the rectifier device 2. (The fundamental period of the output voltage waveform depends on the rotational speed of the field coil 102: it is equal to one sixth (1/6) of the rotational period of the field coil 102 in which the rotor carrying the field coil 102 completes one rotation.) The amplitude Ep of oscillations in the output voltage E is about 2 volts, and the waveform of the output voltage E is very near to that of an ideal rectifier device constituted by ideal diodes having zero reverse recovery time and zero reverse recovery current. On the other hand, the reverse recovery time of the auxiliary diodes 202a through 202c is about 10 to 30 microseconds. However, the oscillations in the output voltage across the auxiliary positive and the negative terminal caused by the reverse recovery currents in the auxiliary diodes 202a through 202c do not affect the performance of the electrical equipment 6.

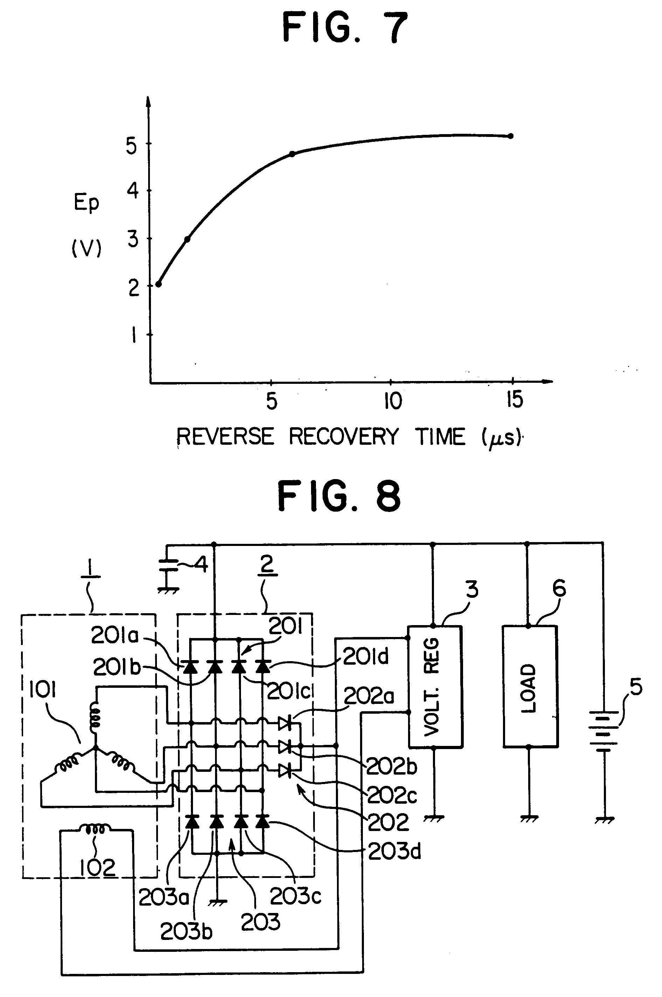

The amplitude Ep of oscillations in the output voltage E across the main positive and the negative terminal of the rectifier device depends on the reverse recovery time of the diodes 201a through 201c and 203a through 203c. Thus, Fig. 7 shows the relationship between the reverse recovery time of the rectifier diodes 201a through 201c and 203a through 203c (taken along the abscissa in microseconds) and the amplitude Ep of oscillations in the output voltage E (taken along the ordinate in volts). As shown in the figure, the oscillation amplitude Ep is limited under 3 volts if the reverse recovery time is not more than 2 microseconds, which is the preferred upper limit thereof according to this invention. By the way, commonly used semiconductor rectifier diodes have a reverse recovery time of about from 10 to 30 microseconds.

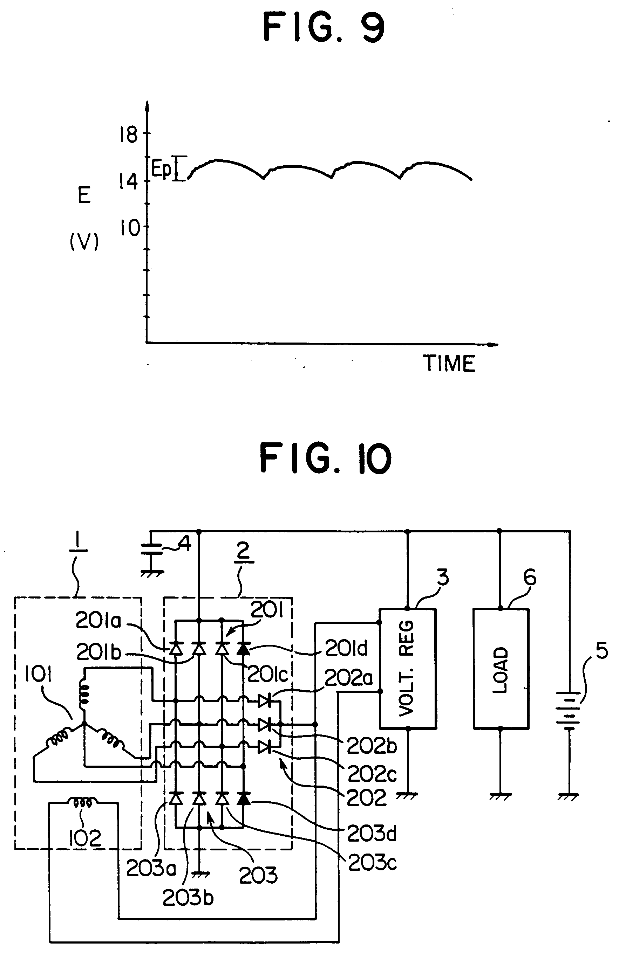

Next, referring now to Fig. 8 of the drawings, another arrangement to which, a second embodiment according to this invention relates is described. The circuit of Fig. 8 is similar to that of Fig. 5, except for the provision of semiconductor diodes 201d and 203d for rectifying the three phase voltages induced in the armature coils 101 in cooperation with diodes 201a through 201c and 203a through 203c. namely, series circuit of diodes 201d and 203d having the same reverse recovery time as diodes 201a through 201c and 203a through 302c is coupled across the main positive and the negative terminal of the rectifier device 2, the forward direction of the diodes 201d and 203d being directed toward the positive terminal. further, the neutral point of the Y-connected armature coils 101 is coupled to an intermediate point between the two diodes 201d and 203d. As shown in Fig. 9, the waveform of the output voltage E across the main positive and the negative terminal of the rectifier device 2 of Fig. 8 contains little damped oscillation components; the oscillation amplitude Ep in the waveform of the output voltage E is about 3 volts.

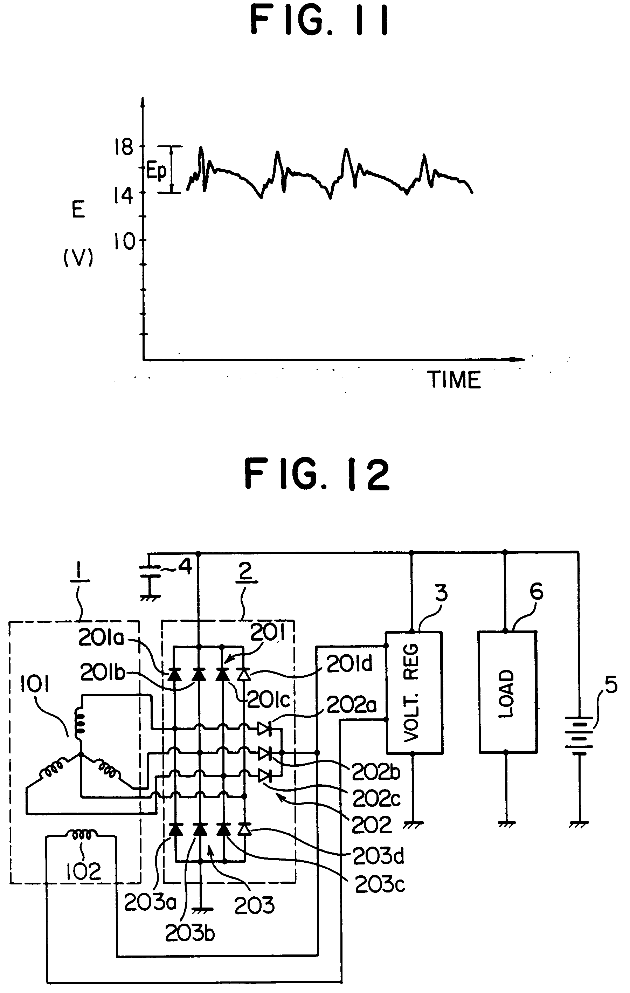

Fig. 10 shows a first embodiment according to this invention, which has the same circuit structure as the arrangement shown in Fig. 8. However, to reduce the number of expensive high speed diodes, only the diodes 201d and 203d coupled to the neutral point of the armature coils 101 are made of the high speed switching type having the reverse recovery time of 0.5 microseconds. Other rectifier diodes are of the common type having a reverse recovery time of about 15 microseconds. As shown in Fig. 11, the high speed diodes 201d and 203d are effective in suppressing the damped oscillations in the waveform of the output voltage E across the main positive and the negative terminal of the rectifier device 2 of Fig. 10; the oscillation amplitude Ep in the waveform of the output voltage E is limited to about 4 volts.

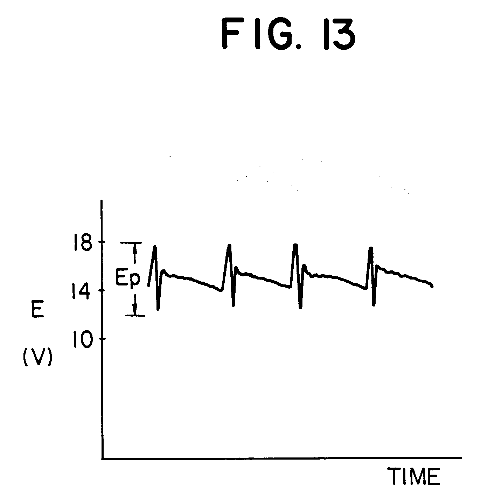

Fig. 12 shows a second embodiment according to this invention, which also has the same circuit structure as the arrangement shown in Fig. 8. However, only the diodes 201a through 201c and 203a through 203c for rectifying the output line voltages of the armature coils 101 are made of the high speed type having the reverse recovery time of 0.5 microseconds. Diodes 201d and 203d, as well as auxiliary diodes 202a through 202c, are of the common type having a reverse recovery time of about 15 microseconds. Fig. 13 shows the waveform of the output voltage E across the main positive and the negative terminal of the rectifier 2 of Fig. 12. The oscillation amplitude Ep is about 6 volts in this case.

## Claims

1. A rectifier device for rectifying an output of a three phase generator (1) including a rotor having a field coil (102) and a stator having armature coils (101) in Y-connection in which phase voltages are induced by the rotating coil, comprising:
a full-wave rectifier circuit (2) of semiconductor diodes (201 to 203) having input terminals of said armature coils in Y-connection, said full-wave rectifier circuit having a positive and a negative output terminal; and
a series circuit of a pair of semiconductor diodes (201d, 203d) coupled across said positive and negative output terminal of said full-wave rectifier circuit, forward directions of said pair of semiconductor diodes coinciding with a direction from said negative to said positive output terminal, wherein an intermediate point in said series circuit between said pair of semiconductor diodes is coupled to a neutral point of said armature coils in Y-connection;
wherein said pair of semiconductor diodes of said series circuit coupled across the positive and the negative output terminal of the full-wave rectifier circuit have a reverse recovery time of not more than 2 microseconds, and the semiconductor diodes of said full-wave rectifier circuit have a reverse recovery time substantially greater than 2 microseconds.

2. A rectifier device for rectifying an output of a three phase generator (1) including a rotor having a field coil (102) and a stator having armature coils (101) in Y-connection in which phase voltages are induced by the rotating field coil comprising:
a full-wave rectifier circuit (2) of semiconductor diodes (201 to 203) having input terminals coupled to output line terminals of said armature coils in Y-connection, said full-wave rectifier circuit having a positive and a negative output terminal; and
a series circuit of a pair of semiconductor diodes (201d, 203d) coupled across said positive and negative output terminal of said full-wave rectifier circuit, forward direction of said pair of semiconductor diodes coinciding with a direction from said negative to said positive output terminal, where an intermediate point in said series circuit between said pair of semiconductor diodes is coupled to a neutral point of said armature coils in Y-connection;
wherein said semiconductor diodes of said full-wave rectifier circuit have a reverse recovery time of not more than 2 microseconds, and
said pair of semiconductor diodes of said series circuit have a reverse recovery time substantially greater than 2 microseconds.

## Patentansprüche

1. Gleichrichtervorrichtung, um einen Ausgang eines Drehstromgenerators (1) gleichzurichten, der einen Rotor mit einer Feldspule (102) und einen Stator mit Ankerspulen (101) in Sternschaltung aufweist, in denen Phasenspannungen von der drehenden Spule induziert werden, wobei die Gleichrichtervorrichtung aufweist:
eine Zweiweg-Gleichrichterschaltung (2) von Halbleiterdioden (201 bis 203), die Eingangsanschlüsse der Ankerspulen in Sternschaltung haben, wobei die Zweiweg-Gleichrichterschaltung einen positiven und einen negativen Ausgangsanschluß hat; und
eine Reihenschaltung von einem Paar von Halbleiterdioden (201d, 203d), die parallel zu dem positiven und dem negativen Ausgangsanschluß der Zweiweg-Gleichrichterschaltung gekoppelt sind, wobei Durchlaßrichtungen des Paars von Halbleiterdioden mit einer Richtung von dem negativen zu dem positiven Ausgangsanschluß zusammenfallen, wobei ein Zwischenpunkt in der Reihenschaltung zwischen dem Paar von Halbleiterdioden mit einem Sternpunkt der Ankerspulen in Sternschaltung gekoppelt ist;
wobei das Paar von Halbleiterdioden der Reihenschaltung, das parallel zu dem positiven und dem negativen Ausgangsanschluß der Zweiweg-Gleichrichterschaltung gekoppelt ist, eine Sperrverzögerungszeit von nicht mehr als 2 µs hat, und die Halbleiterdioden der Zweiweg-Gleichrichterschaltung eine Sperrverzögerungszeit haben, die wesentlich länger als 2 µs ist.

2. Gleichrichtervorrichtung, um einen Ausgang eines Drehstromgenerators (1) gleichzurichten, der einen Rotor mit einer Feldspule (102) und einen Stator mit Ankerspulen (101) in Sternschaltung aufweist, in denen Phasenspannungen von der drehenden Feldspule induziert werden, wobei die Gleichrichtervorrichtung aufweist:
eine Zweiweg-Gleichrichterschaltung (2) von Halbleiterdioden (201 bis 203), die Eingangsanschlüsse hat, die mit Ausgangsleitungsanschlüssen der Ankerspulen in Sternschaltung gekoppelt sind, wobei die Zweiweg-Gleichrichterschaltung einen positiven und einen negativen Ausgangsanschluß hat; und
eine Reihenschaltung von einem Paar von Halbleiterdioden (201d, 203d), die parallel zu dem positiven und dem negativen Ausgangsanschluß der Zweiweg-Gleichrichterschaltung gekoppelt sind, wobei die Durchlaßrichtung des Paars von Halbleiterdioden mit einer Richtung von dem negativen zu dem positiven Ausgangsanschluß zusammenfallen, wobei ein Zwischenpunkt in der Reihenschaltung zwischen dem Paar von Halbleiterdioden mit einem Sternpunkt der Ankerspulen in Sternschaltung gekoppelt ist;
wobei die Halbleiterdioden der Zweiweg-Gleichrichterschaltung eine Sperrverzögerungszeit von nicht mehr als 2 µs haben, und
das Paar von Halbleiterdioden der Reihenschaltung eine Sperrverzögerungszeit hat, die wesentlich länger als 2 µs ist.

## Revendications

1. Un dispositif redresseur pour redresser une sortie d'un générateur à trois phases (1) comprenant un rotor ayant une bobine de champ (102) et un stator ayant des bobines d'armature (101) en connexion en Y, dans lesquelles des tensions de phase sont induites par la bobine en rotation, comprenant :
un circuit redresseur de deux alternances (2) de diodes semi-conductrices (201 à 203) ayant des bornes d'entrée desdites bobines d'armature en connexion en Y, ledit circuit redresseur de deux alternances ayant une borne de sortie positive et une négative; et
un circuit série d'une paire de diodes semi-conductrices (201d, 203d) couplé à travers les bornes de sortie positive et négative du circuit redresseur de deux alternances, des directions directes de ladite paire de diodes semi-conductrices coincidant avec une direction de la borne de sortie négative à la borne de sortie positive, où un point intermédiaire dans ledit circuit série entre ladite paire de diodes semi-conductrices est couplé à un point neutre desdites bobines d'armature en connexion en Y;
dans lequel ladite paire de diodes semi-conductrices du circuit en série couplé à travers les bornes de sortie positive et négative du circuit redresseur de deux alternances ont un temps de récupération inverse de pas plus que 2 micro-secondes, et les diodes semi-conductrices du circuit redresseur de deux alternances ont un temps de récupération inverse sensiblement plus grand que 2 microsecondes.

2. Un dispositif redresseur pour redresser une sortie d'un générateur à trois phases (1) comprenant un rotor ayant une bobine de champ (102) et un stator ayant des bobines d'armature (101) en connexion en Y, dans lesquelles des tensions de phase sont induites par la bobine de champ en rotation, comprenant :
un circuit redresseur de deux alternances (2) de diodes semi-conductrices (201 à 203) ayant des bornes d'entrée couplées à des bornes de lignes de sortie desdites bobines d'armature en connexion en Y, le circuit redresseur de deux alternances ayant une borne de sortie positive et une négative, et
un circuit série d'une paire de diodes semi-conductrices (201d, 203d) couplées à travers la borne de sortie positive et la borne de sortie négative du circuit redresseur à une alternance, une direction directe de ladite paire de diodes semi-conductrices coincidant avec une direction de la borne de sortie négative à la borne de sortie positive, où un point intermédiaire dans le circuit série entre ladite paire de diodes semi-conductrices est couplé à un point neutre desdites bobines d'armature en connexion en Y;
dans lequel les diodes semi-conductrices du circuit redresseur de deux alternances ont un temps de récupération inverse de pas plus que 2 microsecondes, et
ladite paire de diodes semi-conductrices dudit circuit série ont un temps de récupération inverse sensiblement plus grand que 2 microsecondes.
